# EUROPEAN PATENT APPLICATION

(11) **EP 4 053 192 A1**
(43) Date of publication of application: **07.09.2022**
(21) Application number: 20892651.9
(22) Date of filing: 13.11.2020
(51) Int. Cl.: C08J 5/04, B29C 70/34

(54) **PRODUCTION METHOD FOR COMPOSITE MATERIAL**

(30) Priority: 27.11.2019 JP 2019214532
(71) Applicant: Daikin Industries, Ltd., Osaka-shi, Osaka 530-8323 (JP); Fukuvi Chemical Industry Co., Ltd., Fukui-shi, Fukui 918-8585 (JP)
(72) Inventor: MURAKAMI, Shinji, Osaka-Shi, Osaka 530-8323 (JP); YUKAWA, Hirokazu, Osaka-Shi, Osaka 530-8323 (JP); HAGI, Keisuke, Osaka-Shi, Osaka 530-8323 (JP); KANAMORI, Naoaki, Fukui-shi, Fukui 918-8585 (JP)
(74) Representative: Hoffmann Eitle
(86) International application number: PCT/JP2020/042425
(87) International publication number: WO 2021/106630

(57) **Abstract**

Provided is a method of producing a fluororesin/carbon fiber composite material in which the fluororesin film is less likely to shrink in the width direction during production of prepreg. The disclosure relates to a method of producing a composite material including carbon fiber and a melt-fabricable fluororesin, the method including: (1) preparing prepreg by heating and compressing a stack of opened carbon fiber and a film of a melt-fabricable fluororesin at a temperature not lower than a melting point of the fluororesin, the film having a back tension set to 3.0 N/cm² or less; and (2) preparing a composite material by heating and compressing one or more sheets or pieces of the prepreg stacked in a thickness direction at a temperature not lower than the melting point of the fluororesin.

## Description

### TECHNICAL FIELD

The disclosure relates to methods of producing composite materials.

### BACKGROUND ART

In recent years, various fiber-reinforced composite materials have been developed and commercialized. They have a reinforcing material such as carbon fiber, glass fiber, or aromatic polyamide fiber mixed or sandwiched in a matrix such as synthetic resin. These fiber-reinforced composite materials can have excellent performance suitable for purpose in terms of strength, heat resistance, corrosion resistance, electric properties, light weight, or other various aspects, depending on the choice of matrix and reinforcing material. Fiber-reinforced composite materials are therefore used in various fields including aerospace, overland transportation, shipping, construction, civil engineering works, industrial components, and sports equipment, and have great social demands.

The reinforcing fiber may be used in the form of filaments arranged in a desired width, filaments cut to predetermined dimensions, or fabric such as woven fabric. The composite material may be obtained by, for example, directly compositing the reinforcing fiber with a matrix. Alternatively, the composite material may be obtained by impregnating a sheet or woven fabric of regularly arranged filaments with a synthetic resin to prepare a semimanufactured good called prepreg, stacking a suitable number of sheets of the prepreg as necessary, and put them in a device such as an autoclave to complete a desired end product.

Such reinforcing fiber is provided in the form of multifilaments, which are composed of filaments aligned together and bonded with a sizing agent. This makes it difficult to sufficiently impregnate reinforcing fiber bundles with thermoplastic resin, which has high viscosity during processing. Techniques thus have been studied to open reinforcing fiber to facilitate impregnation with resin (e.g., see Patent Literature document 1).

Patent Literature documents 2 and 3 disclose fiber-reinforced thermoplastic resin sheets including opened carbon fiber and a non-fluorinated matrix resin such as nylon or polypropylene.

### CITATION LIST

### - Patent Literature

Patent Literature 1: WO 97/41285
Patent Literature 2: JP 2003-165851 A
Patent Literature 3: JP 2012-148568 A

### SUMMARY OF INVENTION

### - Technical Problem

The disclosure aims to provide a method of producing a fluororesin/carbon fiber composite material in which the fluororesin film is less likely to shrink in the width direction during production of prepreg.

### - Solution to Problem

The disclosure relates to a method of producing a composite material including carbon fiber and a melt-fabricable fluororesin, the method including:
(1) preparing prepreg by heating and compressing a stack of opened carbon fiber and a film of a melt-fabricable fluororesin at a temperature not lower than a melting point of the fluororesin, the film having a back tension set to 3.0 N/cm² or less; and
(2) preparing a composite material by heating and compressing one or more sheets or pieces of the prepreg stacked in a thickness direction at a temperature not lower than the melting point of the fluororesin.

Preferably, the melt-fabricable fluororesin includes at least one selected from the group consisting of a tetrafluoroethylene/perfluoro(alkyl vinyl ether) copolymer, a tetrafluoroethylene/hexafluoropropylene copolymer, an ethylene/tetrafluoroethylene copolymer, polychlorotrifluoroethylene, and polyvinylidene fluoride.

Preferably, the melt-fabricable fluororesin has a melt flow rate of 0.1 to 100 g/10 min and a melting point of 272°C to 323°C.

Preferably, the melt-fabricable fluororesin is a tetrafluoroethylene/perfluoro(alkyl vinyl ether) copolymer.

### - Advantageous Effects of Invention

The disclosure can provide a method of producing a fluororesin/carbon fiber composite material in which the fluororesin film is less likely to shrink in the width direction during production of prepreg.

### DESCRIPTION OF EMBODIMENTS

Fluororesin has many excellent properties such as heat resistance, chemical resistance, sliding properties, and low dielectric constant, and used in many fields such as automobiles, aircraft, semiconductors, electricity, electronics, and chemistry. However, fluororesin has lower strength and higher coefficient of linear expansion than other resins. One solution to this, for example, is to composite fluororesin with reinforcing fiber such as carbon fiber. However, preparing prepreg under the same conditions as for a non-fluorinated matrix resin, such as nylon, may cause the fluororesin film to shrink in the width direction. As a result of intensive studies, the inventors found out that fluororesin has low modulus of elasticity, and therefore drawing out a fluororesin film at the same back tension as that for non-fluorinated resin may cause shrinking of the fluororesin film in the width direction due to back tension and heat. The inventors found out that controlling the back tension to be within a predetermined range can solve the shrinking.

The following specifically describes the disclosure.

The disclosure relates to a method of producing a composite material including carbon fiber and a melt-fabricable fluororesin, the method including: (1) preparing prepreg by heating and compressing a stack of opened carbon fiber and a film of a melt-fabricable fluororesin at a temperature not lower than a melting point of the fluororesin, the film having a back tension set to 3.0 N/cm² or less; and (2) preparing a composite material by heating and compressing one or more sheets or pieces of the prepreg stacked in a thickness direction at a temperature not lower than the melting point of the fluororesin.

With the production method of the disclosure, the film of the melt-fabricable fluororesin is less likely to shrink in the width direction during the prepreg preparation step (1). As a result, the quality stability in the continuous production of the composite material can be improved.

The carbon fiber used in the step (1) is opened. This allows the carbon fiber to be sufficiently impregnated with the fluororesin.

The fiber may be opened by any method such as a method of passing the fiber alternately along projected and depressed rolls, a method of using a drum roll, a method of applying tension fluctuation to the vibration in the axial direction, a method of varying the tension of the carbon fiber bundle using vertically reciprocating two frictional bodies, or a method of blowing air to the carbon fiber bundle. Alternatively, the fiber may be opened by the methods described in JP 3064019 B and JP 3146200 B.

The carbon fiber has a weight per unit area of preferably 100 g/m² or less, more preferably 80 g/m² or less, still more preferably 50 g/m² or less, and preferably 10 g/m² or more. A smaller weight per unit area makes it easier to impregnate the carbon fiber with the fluororesin. The weight per unit area may be 30 g/m² or more.

Examples of the carbon fiber include polyacrylonitrile-based, pitch-based, rayon-based, cellulose-based, lignin-based, phenol-based, and vapor-deposited carbon fibers. Preferred are polyacrylonitrile-based, pitch-based, and rayon-based carbon fibers, with a polyacrylonitrile-based carbon fiber being more preferred.

The carbon fiber may be surface-treated. The carbon fiber may be treated with a treatment agent or a sizing agent.

The fluororesin used in the step (1) is melt-fabricable. The "melt-fabricable" herein means that the polymer can be melted and fabricated using a conventional processing device such as an extruder or an injection molding machine.

The melt-fabricable fluororesin preferably has a melt flow rate (MFR) of 0.1 to 100 g/10 min, more preferably 0.5 to 50 g/10 min.

The MFR herein refers to a value obtained in conformity with ASTM D1238 with a melt indexer as the mass (g/10 min) of a polymer flowing out of a nozzle (inner diameter: 2 mm, length: 8 mm) per 10 minutes at a temperature specified according to the type of fluororesin (e.g., 372°C for PFA and FEP, 297°C for ETFE) and a load specified according to the type of fluororesin (e.g., 5 kg for PFA, FEP, and ETFE).

The fluororesin preferably has a melting point of 150°C to 323°C, more preferably 200°C to 323°C, still more preferably 250°C to 323°C, further preferably 272°C to 323°C, particularly preferably 280°C to 320°C.

The melting point is the temperature corresponding to the maximum value on a heat-of-fusion curve obtained by increasing the temperature at a rate of 10°C/min using a differential scanning calorimeter (DSC).

The fluororesin is preferably at least one selected from the group consisting of a tetrafluoroethylene [TFE]/perfluoro(alkyl vinyl ether) [PAVE] copolymer [PFA], a TFE/hexafluoropropylene [HFP] copolymer [FEP], and an ethylene [Et]/TFE copolymer [ETFE], polychlorotrifluoroethylene [PCTFE], and polyvinylidene fluoride [PVDF], more preferably at least one selected from the group consisting of PFA, FEP, and ETFE, still more preferably PFA.

The PFA contains a polymerized unit based on tetrafluoroethylene (TFE) (TFE unit) and a polymerized unit based on perfluoro(alkyl vinyl ether) (PAVE) (PAVE unit).

Non-limiting examples of the PAVE include those represented by the following formula (1):

CF₂=CF-ORf¹ (1)

wherein Rf¹ is a C1-C10 perfluoroalkyl group, preferably a C1-C5 perfluoroalkyl group. Particularly preferred are perfluoro(methyl vinyl ether) (PMVE), perfluoro(ethyl vinyl ether) (PEVE), and perfluoro(propyl vinyl ether) (PPVE).

The PFA is preferably, but not limited to, a copolymer in which the proportion of the TFE unit to the total of the TFE unit and the PAVE unit is 70 mol% or more and less than 99.5 mol%, more preferably a copolymer in which the proportion of the TFE unit to the total of the TFE unit and the PAVE unit is 70 mol% or more and 98.9 mol% or less, still more preferably a copolymer in which the proportion of the TFE unit to the total of the TFE unit and the PAVE unit is 80 mol% or more and 98.7 mol% or less. The PFA may be a copolymer consisting of TFE and PAVE units, preferably a copolymer in which a monomer unit derived from a monomer copolymerizable with TFE and PAVE is 0.1 to 10 mol% of all monomer units and the sum of the TFE unit and the PAVE unit is 90 to 99.9 mol% of all monomer units. Examples of the monomer copolymerizable with TFE and PAVE include HFP, a vinyl monomer represented by CZ¹Z²=CZ³(CF₂)nZ⁴ (wherein Z¹, Z², and Z³ are the same as or different from each other and are each a hydrogen atom or a fluorine atom; Z⁴ is a hydrogen atom, a fluorine atom, or a chlorine atom; and n is an integer of 2 to 10) and an alkylperfluorovinyl ether derivative represented by CF₂=CF-OCH₂-Rf¹¹ (wherein Rf¹¹ is a C1-C5 perfluoroalkyl group).

The amount of each monomer unit constituting the PFA herein may be calculated by appropriately combining NMR, FT-IR, elemental analysis, and fluorescent X-ray analysis depending on the type of the monomer.

The film of the melt-fabricable fluororesin preferably has a thickness of 0.01 to 2 mm, more preferably 0.01 to 1 mm.

In the step (1), when stacking the carbon fiber and the film of the fluororesin, the back tension of the film is set to 3.0 N/cm² or less. Setting the back tension within the range can reduce the shrinking of the film in the width direction during the production of the prepreg.

The back tension is preferably 2.5 N/cm² or less, more preferably 2.0 N/cm² or less, still more preferably 1.0 N/cm² or less, particularly preferably 0.8 N/cm² or less, and preferably 0.05 N/cm² or more, more preferably 0.1 N/cm² or more.

The back tension is the tension applied to the film in the direction opposite to the film convey direction, and can be adjusted by adjusting the output of a control device. Examples of the control device include ZKB-0.6 AM/YK produced by Mitsubishi Electric Corporation.

In the step (1), the carbon fiber and the film of the fluororesin film are preferably continuously conveyed.

In the step (1), a stack of the carbon fiber and the film having a back tension within the above range is heated and compressed at a temperature not lower than the melting point of the fluororesin to prepare prepreg. Heating and compressing allow impregnation of the carbon fiber with the fluororesin.

The temperature for the heating is not lower than the melting point of the fluororesin, preferably not lower than 310°C, more preferably not lower than 340°C, and preferably not higher than 400°C.

The pressure for the compressing is preferably 0.01 to 5.0 MPa, more preferably 0.1 to 1.0 MPa.

The heating and compressing are preferably performed by applying pressure with rolls heated to a temperature not lower than the melting point of the fluororesin.

The prepreg may be a thermally fused article of the carbon fiber and the fluororesin. In the prepreg, the carbon fiber is preferably impregnated with the fluororesin.

The carbon fiber in the prepreg preferably represents 5 to 70% by volume of the total amount of the carbon fiber and the fluororesin. The carbon fiber more preferably represents 10% by volume or more, still more preferably 15% by volume or more, and more preferably represents 60% by volume or less, still more preferably 50% by volume or less.

The production method of the disclosure may further include a step of preparing a chopped material by cutting the prepreg obtained in the step (1). The chopped material may be used as the prepreg in the step (2).

The chopped material can be two-dimensionally randomly oriented to form a stack so that the carbon fiber can be pseudo-isotropically oriented. This allows the resulting composite material to have a smaller difference in strength between directions. Moreover, the chopped material can be easily formed into complex shapes.

The production method of the disclosure may further include a step of preparing a chopped sheet by heating two or more pieces of the chopped material stacked in the thickness direction. The chopped sheet may be used as the prepreg in the step (2).

In the step (2), one or more sheets or pieces of the prepreg stacked in the thickness direction are heated and compressed at a temperature not lower than the melting point of the fluororesin to prepare a composite material including the carbon fiber and the melt-fabricable resin.

In the step (2), preferably, two or more sheets or pieces of the prepreg are stacked in the thickness direction. In this case, the orientation of the carbon fiber constituting the prepreg may be the same or different for each sheet. When the prepreg for stacking is the chopped material, the chopped material is preferably two-dimensionally randomly oriented.

The temperature for the heating in the step (2) is not lower than the melting point of the fluororesin, preferably not lower than 310°C, more preferably not lower than 340°C, and preferably not higher than 400°C.

The pressure for the compressing in the step (2) is preferably 0.05 to 10 MPa, more preferably 2 to 5 MPa.

In the step (2), molding may be simultaneously performed to obtain a composite molded article containing the carbon fiber and the fluororesin. In this case, for example, the heating and compressing described above may be performed in a compression molding machine.

When the composite material obtained by the production method of the disclosure is obtained from two or more sheets or pieces of the prepreg, the two or more sheets or pieces of the prepreg are preferably integrated. The term "integrated" means that the sheets or pieces of the prepreg are thermally fused to each other to form a single material. The interface between the thermally fused sheets or pieces of the prepreg is not necessarily clear.

In the composite material, the carbon fiber preferably represents 5 to 70% by volume of the total amount of the carbon fiber and the fluororesin. The carbon fiber more preferably represents 10% by volume or more, still more preferable 15% by volume or more, and more preferably represents 60% by volume or less, still more preferably 50% by volume or less.

The composite material can be molded into a molded article by compression molding or other known molding methods. As mentioned above, molding may be performed in the step (2).

The composite material can be used in a wide range of fields, including aerospace, overland transportation, shipping, construction, civil engineering works, industrial components, and sports equipment. In particular, the composite material is suitable for use in components for semiconductor cleaning devices.

### EXAMPLES

The disclosure will be specifically described below referring to, but is not limited to, examples.

The values in the examples were measured by the following method.

### (1) MFR

The mass of a polymer flowing out of a nozzle per 10 minutes was measured at a measurement temperature of 372°C and a load of 5 kg in conformity with ASTM D3307.

### Example 1

### <Preparation of UD sheet (prepreg)>

A UD sheet was produced using the following materials.
Carbon fiber bundles (T700SC-12000-60E produced by Toray Industries, Inc.)
PFA film (MFR 14 g/10 min, melting point 306°C, thickness 0.05 mm)

Five of the carbon fiber bundles were each opened to a width of 42 mm by a known fiber opening method and arranged in the width direction to form an open carbon fiber sheet with a width of 210 mm (weight per unit area: 38.1 g/m²). This open carbon fiber sheet and the PFA film were then stacked, with the back tension of the PFA film set to 0.6 N/cm² by setting the output of a control device (ZKB-0.6AM/(YK), produced by Mitsubishi Electric Corporation Corporation) to 5% or less. The stack was then passed between heating and compressing rolls set to a heating temperature of 360°C (linear velocity: 10 m/min), whereby a UD sheet was prepared. A UD sheet with a carbon fiber volume content (Vf) of 29.7% and a thickness of 0.072 mm was obtained without shrinking of the PFA film in the width direction.

### Example 2

A UD sheet was prepared as in Example 1 except that the thickness of the PFA film was changed to 0.025 mm and the back tension was changed to 0.25 N/cm². A UD sheet with a Vf of 45.8% and a thickness of 0.046 mm was obtained without shrinking of the PFA film in the width direction.

### Example 3

A UD sheet was prepared as in Example 1 except that the thickness of the PFA film was changed to 0.050 mm and the back tension was changed to 2.5 N/cm². Although the PFA film shrank by about 2 to 3 mm in the width direction, a UD sheet with a Vf of 29.7% and a thickness of 0.072 mm was obtained.

### Example 4

A UD sheet was prepared as in Example 1 except that three of the carbon fiber bundles were each opened to a width of 75 mm and arranged in the width direction to form an open carbon fiber sheet with a width of 225 mm (weight per unit area: 26.7 g/m²). Although the PFA film shrank by about 2 to 3 mm in the width direction, a UD sheet with a Vf of 22.7% and a thickness of 0.064 mm was obtained.

### <Preparation of chopped material>

Each of the UD sheets was cut along the fiber direction to a width of 5 mm and along the direction perpendicular to the fiber direction to a length of 20 mm using a known feeding mechanism and a known cutting mechanism. Thus, a chopped material was prepared.

### <Chopped sheet preparation>

A chopped sheet was prepared from each of the UD sheets by a method described in JP 2016-27956 A. With this method, a UD sheet cutting mechanism, a chopped material conveying mechanism, a sheet integrating mechanism, and a sheet winding mechanism were used.

First, the UD sheet was cut with the UD sheet cutting mechanism along the fiber direction to a width of 5 mm and cut along the direction perpendicular to the fiber direction to a length of 20 mm, whereby a chopped material was prepared.

The pieces of the obtained chopped material, 5 mm wide × 20 mm long, were then naturally dropped and dispersed on the conveyor belt. The resulting stack of pieces of the chopped material on the belt included two or more pieces stacked in the thickness direction.

Next, the pieces of the chopped material were melted and integrated using heating rollers set to a heating temperature of 360°C (linear velocity: 0.6 m/min), whereby a chopped sheet was prepared. The obtained chopped sheet had a weight per unit area of 500 g/m² and a thickness of 0.6 mm.

### <Preparation of composite material>

A composite material was prepared from each of the UD sheets, chopped materials, and chopped sheets using a known compression molding machine.

The preparation from UD sheets was performed as follows. UD sheets were combined to a size of 298 mm in width × 298 mm in length, and 940 sheets were stacked so that the resulting molded article would have a thickness of 40 mm. A mold was set to a heating temperature of 360°C, and the stack of the sheets was heated and compressed at a pressure of 5 MPa for five minutes. The mold was then set to a temperature of 30°C and the stack was compressed at 7 MPa for 20 minutes.

### Comparative Example 1

An attempt was made to prepare a UD sheet as in Example 2 except that the open carbon fiber sheet and the PFA film were stacked with the back tension of the PFA film set to 5.0 N/cm². However, during passing between the heating and compressing rolls, the PFA film was stretched in the longitudinal direction, shrank in the width direction by 20 mm or more, and changed in thickness. A UD sheet complying with the set specifications was thus not obtained.

## Claims

1. A method of producing a composite material including carbon fiber and a melt-fabricable fluororesin, the method comprising:
(1) preparing prepreg by heating and compressing a stack of opened carbon fiber and a film of a melt-fabricable fluororesin at a temperature not lower than a melting point of the fluororesin, the film having a back tension set to 3.0 N/cm² or less; and
(2) preparing a composite material by heating and compressing one or more sheets or pieces of the prepreg stacked in a thickness direction at a temperature not lower than the melting point of the fluororesin.

2. The production method according to claim 1,
wherein the melt-fabricable fluororesin comprises at least one selected from the group consisting of a tetrafluoroethylene/perfluoro(alkyl vinyl ether) copolymer, a tetrafluoroethylene/hexafluoropropylene copolymer, an ethylene/tetrafluoroethylene copolymer, polychlorotrifluoroethylene, and polyvinylidene fluoride.

3. The production method according to claim 1 or 2,
wherein the melt-fabricable fluororesin has a melt flow rate of 0.1 to 100 g/10 min and a melting point of 272°C to 323°C.

4. The production method according to any one of claims 1 to 3,
wherein the melt-fabricable fluororesin is a tetrafluoroethylene/perfluoro(alkyl vinyl ether) copolymer.
